# EUROPÄISCHE PATENTSCHRIFT

(11) **EP 0 777 802 B1**
(45) Veröffentlichungstag und Bekanntmachung des Hinweises auf die Patenterteilung: **26.05.1999**
(21) Anmeldenummer: 95929828.2
(22) Anmeldetag: 09.08.1995
(51) Int. Cl.: E04F 15/12, C04B 41/70, C04B 41/65

(54) **BESCHICHTUNGSSYSTEM FÜR ZEMENTGEBUNDENE BÖDEN**
COATING SYSTEM FOR CEMENT-GROUTED FLOORS
SYSTEME DE REVETEMENT POUR SOLS CIMENTES

(30) Priorität: 23.08.1994 DE 4429785
(43) Veröffentlichungstag der Anmeldung: 11.06.1997
(73) Patentinhaber: Heidelberger Bauchemie GmbH, 69120 Heidelberg (DE)
(72) Erfinder: STUTZ, Dieter, D-40670 Meerbusch (DE)
(74) Vertreter: Patentanwälte Zellentin & Partner
(86) Internationale Anmeldenummer: EP9503161
(87) Internationale Veröffentlichungsnummer: WO9606249

(56) Entgegenhaltungen:
- DE-A- 4 127 351

## Beschreibung

Die Erfindung betrifft ein Beschichtungssystem für zementgebundene Böden, durch welches Oberflächenbeschädigungen und Risse überdeckt werden und welches insbesondere auch mit Fahrzeugen befahren werden kann.

Aus der Praxis sind Beschichtungssysteme bekannt, die dazu dienen, Risse und Beschädigungen in Betonmauerwerk oder zementgebundenen Böden zu überbrücken, wodurch einerseits verhindert wird, daß sich solche Beschädigungen ausbreiten und andererseits, eine glatte, rißfreie Oberfläche gewährleistet ist, welche ein Eindringen von Schmutz, Tausalzen, Lösemitteln und Atmosphärilien verhindert. Die Oberflächen solcher Beschichtungssysteme sollen vorzugsweise mechanisch gut belastbar sein und insbesondere ein Befahren erlauben.

Bei bekannten Beschichtungssystemen wird üblicherweise auf den Betonuntergrund eine Grundierung aus organischen Bindemitteln bzw. aus einem zementverträglichen Kunststoff und Zuschlag aufgebracht; gegebenenfalls erfolgt eine zusätzliche Glattspachtelung, um Unebenheiten auszugleichen. Auf diese Grundierung wird dann eine Kunststoffschicht aufgebracht, in welche zusätzlich, um die Zugfestigkeit zu erhöhen, noch Gewebe oder Vliese aus Glas- oder Kunststoffasern eingebracht werden können. Auf diese Kunststoffschicht wird dann anschließend noch eine Oberlage aus einem chemisch und mechanisch beständigen Material mit hohem E-Modul, üblicherweise zwischen 3000 und 10000 N/mm² aufgebracht. Diese Schicht besteht üblicherweise aus einem organischen Bindemittel mit anorganischen Füllstoffen, welche die Härte bedingen.

Als organische Bindemittel werden vorzugsweise Zweikomponenten Reaktionskunststoffe (EP, EP-PU, PU, PMH, selbstvulkanisierende Gummi, Polyester, etc) verwendet. Als Füllstoffe der Deckschicht werden Quarzsand, Korund in geeigneter Körnung verwendet, wodurch die Härte und Rutschfestigkeit der Oberflächenschicht bedingt ist (vergl. EP 0475 000 - A1, GB 2 045 109 A, CH 659 813 A5, DE 38 38 320 A1).

Da die Kunststoffschichten vergleichsweise schlecht auf zementgebundenen Flächen haften, wird in diesen Schriften vorgeschlagen, die Oberflächen zusätzlich durch Bürsten, Sandstrahlen oder versehen mit Bohrungen aufzurauhen und spezielle Haftgrundierungen (Primer) aufzubringen, was dieses Verfahren verteuert. Darüberhinaus sind auch die Beschichtungssysteme selbst vergleichsweise teuer und müssen zur Rißüberbrückung wegen ihrer geringen mechanischen Festigkeit in relativ dicker Schicht aufgebracht werden. Das Einarbeiten von Geweben oder Vliesen zur Erhöhung der Querzugbelastbarkeit ist ebenfalls vorteilhaft.

Es stellte sich daher die Aufgabe, ein Beschichtungssystem zu finden, welches preiswert ist, einfach aufgebracht werden kann und vor allem für das Befahren die notwendige Festigkeit besitzt.

Diese Aufgabe wird gemäß den Merkmalen des Hauptanspruchs gelöst und durch die Merkmale der Unteransprüche gefördert.

Es erscheint überraschend, daß eine vergleichsweise harte Schicht aus vorwiegend anorganischen Bindemitteln wie Zement, Efa-Füller etc., welche nur in vergleichsweise geringem Umfang organische zementverträgliche Polymere als zusätzliche Bindemittel und gegenbenenfalls anorganische oder organische Füllstoffe enthält auch bei hoher Belastung eine genügende Festigkeit aufweist und nicht bricht oder reißt, so daß solche Schichten auch Risse abdecken können und beim Befahren nicht zerbrechen.

Diese als Grund- oder Schwimmschicht bezeichnete Schicht besteht üblicherweise aus 5 % bis 50 % des anorganischen Bindemittels, 5 % bis 60 % der organischen Polymeren und 0 - 80 % Füllstoffen. Als anorganisches Bindemittel wird Zement, Efa-Füller etc. verwendet. Als organische Polymere werden insbesondere wässrige Dispersionen von Acrylaten eingesetzt. Als Füllstoffe können Sand, Grus, Schlackenmehl, Flugasche und gegebenenfalls auch feingepulverte organische Materialien eingesetzt werden.

Die Deckschicht ist prinzipiell aus den gleichen Produkten aufgebaut wie die Grundschicht, jedoch wird zur Erhöhung der Festigkeit der Anteil der anorganischen Bindemittel erhöht auf 5 % bis 70 % und der Anteil der organischen Polymeren entsprechend vermindert 3 % bis 50 %. Ferner sind als Füllstoffe 10 % bis 70 % harte anorganische Pulver wie Quarzsand, Korund, Schlackenmehl etc. enthalten. Um insbesondere die Oberfläche besonders hart und wiederstandsfähig zu machen, werden entsprechend grobkörnige Füllmaterialien zusätzlich auf die Oberfläche aufgestreut, wodurch neben einer besonderen Härte auch eine Erhöhung der Rutschfestigkeit eines solchen Bodens erzeugt wird.

Zum Aufbringen des erfindungsgemäßen Beschichtungssystems wird der Untergrund von Verunreinigungen wie z. B. Sand, Staub, Öl- oder Fettresten gereinigt und lockere Schlämmschichten oder mürbe Abschnitte sowie Farbanstriche mittels rotierender Stahlbürsten, Fräsen etc. enffernt. Danach wird der Boden mattfeucht eingestellt, wobei eine Pfützenbildung vermieden werden soll. Bei sehr trockenen oder sehr stark saugenden Untergründen ist eventuell noch eine Grundierung einzusetzen, die ein Absaugen der Feuchtigkeit aus der Schwimmschicht verhindert.

Zement, Polymerdispersion und Zuschlagstoffe werden in den benötigten Mengen gemischt und mit Wasser versetzt, bis eine verarbeitbare Masse entsteht, welche dann auf den Unterboden aufgespritzt, aufgespachtelt oder aufgestrichen wird. Der Zement bindet bei niederen Temperaturen nur langsam ab und härtet unter 4°C praktisch nicht aus, so daß bei der Verarbeitung mindestes Temperaturen von 8 - 10°C, vorzugsweise Raumtemperaturen, herrschen sollten. Bei extremen Witterungsbedingungen (starker Luftzug, direkte Sonneneinstrahlung) kann es vorteilhaft sein, die fertigen Schichten bis zur Durchhärtung mit Folien abzudecken, um ein vorzeitiges Austrocknen zu verhindern, oder ein Auswaschen durch Regen zu vermeiden.

Nach Durchhärten der Schwimmschicht wird in gleicher Weise auch die Deckschicht aufgetragen und gegebenenfalls noch in feuchtem Zustand mit entsprechendem Sand oder Korundgranulat abgestreut.

Die erfindungsgemäßen Beschichtungssysteme sind hart und zäh genug, um üblichen Beanspruchungen zu widerstehen und auch befahrbar zu sein. Falls gewünscht, kann jedoch zusätzlich, sowohl in der Grundschicht als auch in der Deckschicht, zur Verstärkung noch ein Gewebe oder Vlies mit eingearbeitet werden, wobei dann in üblicher Weise zunächst nur ca. die Hälfte der Schichtdicke aufgetragen, das Gewebe aufgelegt und der Rest der Beschichtung aufgetragen wird. Die erfindungsgemäßen Mischungen sind üblicherweise so pastös eingestellt, daß sie das Gewebe durchdringen und eine feste Haftung innerhalb des gesamten Schichtverbundes bewirken.

## Patentansprüche

1. Beschichtungssystem für zementgebundene Böden bestehend aus
a) einer auf dem Boden aufliegenden elastischen Schwimmschicht, aus einem oder mehreren anorganischen Bindemitteln und einem organischen zementverträglichen Polymer sowie gegebenenfalls organischen oder anorganischen Füllstoffen,
b) einer Deckschicht aus einem oder mehreren anorganischen Bindemitteln und gegebenenfalls zementverträglichen Polymeren sowie anorganischen Zuschlagstoffen.

2. Beschichtungssystem gemäß Anspruch 1, **dadurch gekennzeichnet**, daß in die Schwimmschicht Gewebe- oder Vlieseinlagen eingelegt oder organische oder anorganische Fasermaterialien eingearbeitet sind.

3. Beschichtungssystem gemäß Anspruch 1 und 2, **dadurch gekennzeichnet**, daß zwischen dem Boden und der Schwimmschicht eine zusätzliche Grundierungsschicht eingebracht ist.

4. Beschichtungssystem gemäß einem der Ansprüche 1 - 3, **dadurch gekennzeichnet**, daß die Deckschicht mit einem harten anorganischen Material abgestreut wird.

5. Beschichtungssystem gemäß einem der Ansprüche 1 - 4, **dadurch gekennzeichnet**, daß das anorganische Bindemittel Zement oder Efa-Füller ist.

6. Beschichtungssystem gemäß einem der Ansprüche 1 - 5, **dadurch gekennzeichnet,** daß das Polymer eine wässrige Dispersion aus Acrylaten ist.

7. Beschichtungssystem gemäß einem der Ansprüche 1 - 6, **dadurch gekennzeichnet**, daß die Schwimmschicht
a) eine Dicke von 1 - 10, vorzugsweise 2 - 6 mm, aufweist und die Deckschicht
b) eine Dicke von 3 - 20 mm, vorzugsweise 5 - 10 mm, aufweist.

## Claims

1. Coating system for cement-bound floors, consisting of
a) an elastic floating layer lying on the floors of one or more inorganic binding agents and an organic cement-compatible polymer, as well as possibly organic or inorganic filling materials,
b) a covering layer of one or more inorganic binding agents and possibly cement-compatible polymers, as well as inorganic additive materials.

2. Coating system according to claim 1, characterised in that fabric or fleece layers are laid into the floating layer or organic or inorganic fibre materials are incorporated therein.

3. Coating system according to claim 1 or 2, characterised in that an additional priming layer is introduced between the floors and the floating layer.

4. Coating system according to one of claims 1 - 3, characterised in that the covering layer is sprinkled with a hard inorganic material.

5. Coating system according to one of claims 1 - 4, characterised in that the inorganic binding agent is cement or Efa filler.

6. Coating system according to one of claims 1 - 5, characterised in that the polymer is an aqueous dispersion of acrylates.

7. Coating system according to one of claims 1 - 5, characterised in that the floating layer
a) has thickness of 1 - 10, preferably 2 - 6 mm and the covering layer
b) has a thickness of 3 - 20 mm, preferably 5 - 10 mm.

## Revendications

1. Système de revêtement pour sols cimentés, comprenant
a) une couche flottante élastique reposant sur le sol, composée d'un ou de plusieurs liants inorganiques et d'un polymère organique compatible avec le ciment et, le cas échéant, de matières de remplissage également organiques ou inorganiques,
b) une couche de recouvrement composée d'un ou de plusieurs liants inorganiques et, le cas échéant, de polymères compatibles avec le ciment et de matières de charge inorganiques.

2. Système de revêtement selon la revendication 1, caractérisé en ce que des inserts de tissu ou de non-tissé sont placés dans la couche flottante ou des matières fibreuses organiques ou inorganiques sont incorporées dans celle-ci.

3. Système de revêtement selon les revendications 1 et 2, caractérisé en ce qu'une couche de fond supplémentaire est placée entre le sol et la couche flottante.

4. Système de revêtement selon l'une des revendications 1 à 3, caractérisé en ce qu'une matière inorganique dure est dispersée sur la couche de recouvrement.

5. Système de revêtement selon l'une des revendications 1 à 4, caractérisé en ce que le liant inorganique est du ciment ou de la matière de remplissage de type Efa.

6. Système de revêtement selon l'une des revendications 1 à 5, caractérisé en ce que le polymère est une dispersion aqueuse d'acrylates.

7. Système de revêtement selon l'une des revendications 1 à 6, caractérisé en ce que la couche flottante
a) présente une épaisseur de 1 à 10, de préférence 2 à 6 mm et la couche de recouvrement
b) une épaisseur de 3 à 20 mm, de préférence 5 à 10 mm.
